# EUROPÄISCHE PATENTSCHRIFT

(11) **EP 4 146 502 B1**
(45) Veröffentlichungstag und Bekanntmachung des Hinweises auf die Patenterteilung: **21.08.2024**
(21) Anmeldenummer: 21794300.0
(22) Anmeldetag: 27.09.2021
(51) Int. Cl.: B60N 2/34, B60N 2/30, B60N 2/02, B60N 2/24

(54) **SITZSYSTEM FÜR EIN FAHRZEUG**
SEATING SYSTEM FOR A VEHICLE
SYSTÈME DE SIÈGE POUR VÉHICULE

(30) Priorität: 20.10.2020 DE 102020127597
(43) Veröffentlichungstag der Anmeldung: 15.03.2023
(73) Patentinhaber: RÜLLER, Norbert, 44651 Herne (DE)
(72) Erfinder: RÜLLER, Norbert, 44651 Herne (DE)
(74) Vertreter: Rößner, Ulrike
(86) Internationale Anmeldenummer: PCT/DE2021/100779
(87) Internationale Veröffentlichungsnummer: WO 2022/083821

(56) Entgegenhaltungen:
- DE-A1- 102006 038 574
- DE-T2- 69 727 532
- US-A- 4 669 780

## Beschreibung

Die Erfindung betrifft ein Sitzsystem für ein Fahrzeug, umfassend einen ersten und einen zweiten Fahrzeugsitz, wobei erster und zweiter Fahrzeugsitz längs einer zur Längsachse des Fahrzeugs parallelen Richtung linear zueinander angeordnet sind, und wobei jeder Fahrzeugsitz umfasst ein Sitzflächenelement, eine Rückenlehne sowie eine Bodenhalterung zur Befestigung des Fahrzeugsitzes auf einer Aufstandsfläche des Fahrzeugs, wobei jeder Fahrgastsitz zwischen einer Sitzstellung und einer Liegestellung verstellbar ist und wobei die Neigung der Rückenlehne in Bezug auf das Sitzflächenelement verstellbar ist, wobei das Sitzflächenelement und die Rückenlehne jedes Fahrzeugsitzes jeweils eine in Sitzstellung zur Aufnahme eines Fahrgastes in sitzender Körperhaltung eingerichtete Sitzoberfläche aufweisen, und wobei das Sitzflächenelement des zweiten Fahrzeugsitzes mittels einer um eine Horizontalachse gegenüber der Bodenhalterung drehgelenkigen Lagerung in eine Liegestellung verschwenkbar ist, bei der das Sitzflächenelement des zweiten Fahrzeugsitzes eine zur Aufstandsfläche des Fahrzeugs parallele Ausrichtung mit zur Aufstandsfläche hin orientierter Sitzoberfläche und die Rückenlehne des zweiten Fahrzeugsitzes eine zur Aufstandsfläche des Fahrzeugs senkrechte Ausrichtung aufweisen. Die Erfindung betrifft ferner ein Fahrzeug, dessen zur Personenbeförderung eingerichteter Innenraum mit mindestens einem solchen Sitzsystem ausgestattet ist.

Gattungsgemäße Fahrzeugsitzsysteme finden ihren Einsatzbereich bevorzugt in öffentlichen Verkehrsmitteln. Dort haben sich Großraumwagen mit sogenannter Reihenbestuhlung durchgesetzt. Bei einer solchen Reihenbestuhlung sind eine Mehrzahl von Sitzen in jeweils identischer Ausrichtung zueinander entlang der Längsachse bzw. Bewegungsrichtung des Fahrzeugs angeordnet. Gegenüber einer sog. "vis-ä-vis"-Bestuhlung hat die Reihenbestuhlung den Vorteil, dass Reisende nicht einander gegenüber sitzen. Somit ist der freie Zwischenraum zwischen der Aufstandsfläche und der Unterseite des jeweils vorderen Sitzes als Beinraum für den Passagier des jeweils hinteren Sitzes nutzbar. Bei konsequenter Bestuhlung eines Fahrgastraumes in Reihenbestuhlung verfügen somit alle Sitzplätze über einen autonomen Bereich mit Beinfreiheit. Auf diese Weise können in Reihenbestuhlung kürzere Sitzabstände bzw. ein engerer Sitzteiler als bei der vorgenannten "vis-ä-vis"-Bestuhlung ohne Verschlechterung des Sitzkomforts realisiert werden. Übliche Fahrgastsitze für Großraumwagen sind beispielsweise aus DE 10 2007 012 728 A1 oder DE 10 2010 039 409 A1 bekannt. Diese Fahrgastsitze sind zwar zwischen einer Sitz- und einer Liegestellung verstellbar. Allerdings sind die hierzu notwendigen Verstellwege kinematisch begrenzt, so dass im Ergebnis auch bei einer sog. "Liegestellung" lediglich die Neigung der Rückenlehne um ein eher geringes Maß gegenüber der Sitzstellung reduziert wird; d.h. die Rückenlehne sich insbesondere in keiner horizontalen Ausrichtung befindet. Insbesondere kann mit solchen Fahrgastsitzen keine tatsächliche Liegeposition im Sinne einer horizontal oder nahezu horizontal ausgerichteten Rückenlehne erreicht werden. Ebenso sind die Sitz- und Rückenflächen dieser aus dem Stand der Technik bekannten Fahrgastsitze zu klein, als dass sich ein Reisender von üblicher Körpergröße darauf zur Ruhe legen könnte, selbst wenn diese Fahrgastsitze mittels vollständiger Verstellung in eine horizontale Lage überführbar wären. Für die Fahrzeugkonzepte der meisten öffentlichen Verkehrsmittel werden diese Nachteile in Kauf genommen, da die Fahrzeuge bislang ausschließlich oder überwiegend im Tagesverkehr zum Einsatz kommen und somit auf die Komfortbedürfnisse sitzender Fahrgäste ausgelegt und optimiert sind. Allerdings sind solche Fahrzeugsitze bei Fahrgästen im Nachtreiseverkehr wenig beliebt, da sie kein entspanntes Ruhen oder gar Schlafen über einen längeren Zeitraum, wie er für Nachreiseverkehre typisch ist, ermöglichen.

Für Nachtreiseverkehre sind hingegen Fahrzeugsitze bekannt, die zusätzlich zu Rückenlehne und Sitzflächenelement auch ein Fußteil mit einer flächig ausgeprägten Fuß-Ablage umfassen, auf der ein Reisender in liegender Körperhaltung seine Beine in gestreckter Weise ablegen kann. Diese Fahrzeugsitze können zwar zu vollständigen Liegeplätzen umgewandelt werden, die durch eine nahezu horizontale Ausrichtung aller drei vorgenannter Sitz-Komponenten gekennzeichnet ist. Allerdings sind hierfür kinematisch aufwändige Verstell- bzw. Umbaumechanismen erforderlich, was in einem hohen Eigengewicht und sperrigen Abmessungen solcher Fahrzeugsitze resultiert. Abgesehen davon, dass solche auf den Nachtverkehr ausgelegten Fahrzeugsitze in einer aufrechten Sitzposition bzw. Tagesstellung wegen des bei sitzender Körperhaltung oftmals als störend wahrgenommenen Fussteils einen meist nur eingeschränkten Sitzkomfort bieten, können solche Fahrzeugsitze wegen ihrer großen Längserstreckung in der für den Nachtverkehr vorgesehen horizontalen Liegestellung zudem nur mit großen Zwischenabständen zueinander im Innenraum von Fahrzeugen installiert werden. Dies hat nachteilige Auswirkungen auf die Sitzplatzkapazität eines mit solchen Fahrzeugsitzen ausgestatteten Fahrzeugs im Tagesverkehr, wodurch sich deren betriebswirtschaftliche Rentabilität deutlich verringert.

Ein Wechsel von Fahrzeugsitzen, die spezifisch für Tages- oder Nachtverkehre eines Fahrzeugs ausgelegt sind, macht eine Änderung des Sitzteilers erforderlich und ist somit nur durch Umbauten der Fahrzeugbestuhlung unter Nutzung von Werkzeugen und während eines Werkstattaufenthalts möglich.

Aus DE 697 27 532 T2 ist ein Sitzsystem mit einer Mehrzahl von Fahrgastsitzen bekannt, die jeweils ein Sitzkissen, eine Sitzlehne und einen Sitzunterstützungsrahmen umfassen. Mittels Führungsschienen ist jeder Fahrgastsitz im Fahrgastraum entlang der Längsrichtung des Fahrzeugs verschiebbar gelagert. Dieser Sitzunterstützungsrahmen ist um eine im Bereich der Führungsschiene bodennah angeordnete horizontale erste Drehachse verschwenkbar, was eine Höhenverstellbarkeit des Fahrgastsitzes in Bezug auf die Bodenfläche bzw. dessen Aufstandsfläche im Fahrgastraum ermöglicht. Der Sitzunterstützungsrahmen wird hierbei in der Art einer Schwinge um die erste Drehachse bewegt, wodurch sich seine Neigung in Bezug auf die Aufstandsfläche des Sitzes verändert. Die Sitzlehne und das Sitzkissen sind um eine horizontale zweite Drehachse, welche an dem zum Ort der ersten Drehachse entfernten zweiten Ende der durch den Sitzunterstützungsrahmen gebildeten Schwinge angeordnet ist, in Bezug auf den Sitzunterstützungsrahmen verschwenkbar gelagert. Dies ist notwendig, um die durch das Schwingen um die erste Drehachse verursachten Neigungsänderungen des Sitzunterstützungsrahmens in Bezug auf den Fahrgast auszugleichen. Schließlich können Sitzlehne und Sitzkissen noch mittels eines dritten Mechanismus relativ zueinander in zwei definierte Orientierungen gebracht werden; nämlich einer ersten "Sitzorientierung" und einer zweiten Orientierung, in der Sitzlehne und Sitzkissen in der gleichen Ebene verbunden sind. Letztgenannte Orientierung könnte als eine Liegestellung für Fahrgäste nutzbar gemacht werden. Allerdings müssten für das Herstellen einer solchen Liegestellung zwei Fahrgastsitze mit relativ aufwändigen Bedienhandlungen vollständig umgebaut werden und die hieraus resultierende Liegefläche besteht aus vielen Einzelflächen mit Zwischenfugen. Eine solche Liegefläche ist zudem in allen Richtungen "offen" und bietet den Fahrgästen keinerlei Privatsphäre. In Summe wird eine solche Liegefläche von Fahrgästen als unangenehm wahrgenommen. Es ist deshalb nicht verwunderlich, dass dieses Sitzsystem auf die Realisierung unterschiedlichster Sitzlandschaften im Fahrgastinnenraum eines straßengebundenen Großraum-Personenkraftwagens abzielt, dessen Innenraum durch die Fahrzeugwände hinreichende Privatsphäre für dessen Nutzer gewährleistet. Ein weiterer Schwerpunkt liegt darauf, dass dieser PKW-Innenraum für alle möglichen Zwecke variabel nutzbar gemacht werden soll. Insbesondere sollen dort die Sitze zur Schaffung von Gepäckraum platzsparend verstaubar sein. Die Vielzahl von kleinen Teilflächen mit zwischenliegenden Fugen entspricht in keiner Weise den ergonomischen Anforderungen, die an eine Liegefläche zu stellen sind, auf der ein Mensch sich über einen Zeitraum von mehreren Stunden seine Nachtruhe verbringen soll. Zudem sind die zum Verstellen des Sitzes zwischen Sitz- und Liegestellung erforderlichen Führungsschienen anfällig für Verschmutzungen, was in öffentlichen Verkehrsmitteln ebenfalls zu Akzeptanzproblemen bei den Fahrgästen führt. Eine für einen bequemen Nachtreiseverkehr in öffentlichen Verkehrsmitteln (wie z.B. Schienenfahrzeugen oder Reisebussen) geeignete Liegeposition lässt sich mit einem solchen Sitzsystem jedenfalls nicht realisieren.

Der Erfindung liegt daher die Aufgabe zugrunde, ein gattungsgemäßes Sitzsystem für ein Fahrzeug bereitzustellen, welches diese vorgenannten Nachteile überwindet. Insbesondere soll es nicht nur in einfach bedienbarer Weise zwischen einer Sitz- und einer Liegestellung umbaubar sein, sondern vor allem auch die im bisherigen Stand der Technik ungelösten Widersprüche zwischen einem aus betriebswirtschaftlichen Gründen angestrebten hinreichend dichten Sitzteiler für den Tagesverkehr und einer komfortablen und bequemen Liegefläche für den Nachtverkehr auflösen. Unter einem "Sitzteiler" ist im Kontext dieser Erfindung der Abstand eines Fahrzeugsitzes zum in Längsrichtung davorliegenden Sitz eines Fahrzeugs bzw. Verkehrsmittels zu verstehen. Gemäß des aktuellen Standes der Technik sind diese beiden Zielstellungen miteinander unvereinbar und könnten von einem Sitzsystem allenfalls mittels größerer Umbaumaßnahmen erfüllt werden, die einen Werkstattaufenthalt des Fahrzeuges erfordern würden. Somit liegt der Erfindung neben der vorgenannten einfachen Umbaubarkeit zwischen einer Sitz- und einer Liegestellung insbesondere auch die Aufgabe zugrunde, ein Sitzsystem bereitzustellen, das einen verbesserten Fahrgast-Komfort im Nachtverkehr bei dennoch hoher Sitzplatz-Kapazität im Tagesverkehr (bzw. eine höhere Sitzplatz-Kapazität im Tagesverkehr bei dennoch hohem Fahrgast-Komfort im Nachtverkehr) ermöglicht.

Erfindungsgemäß wird diese Aufgabe dadurch gelöst, dass in dieser Liegestellung des zweiten Fahrzeugsitzes die Sitzoberfläche von dessen Sitzflächenelement und die Sitzoberfläche von dessen Rückenlehne einen Zwischenwinkel von 270° zueinander ausbilden.

Diese Liegestellung ist dadurch charakterisiert, dass das Sitzflächenelement des zweiten Fahrzeugsitzes ausgehend von der für den Tagesverkehr charakteristischen Sitzstellung, bei der die Sitzoberflächen von Sitzflächenelement und Rückenlehne einen Winkel von näherungsweise ca. 90° (bei in etwa senkrecht in Bezug auf die Aufstandsfläche des Fahrzeugsitzes eingestellter Rückenlehne) zueinander aufweisen, mittels einer Drehbewegung um eine Horizontalachse um etwa 180° nach hinten geschwenkt wird, während die Rückenlehne des zweiten Fahrzeugsitzes von dieser Schwenkbewegung des Sitzflächenelements kinematisch entkoppelt ist und erfindungsgemäß in unveränderter Ausgangsposition der Sitzstellung verbleibt. Sofern diese Ausgangsposition der Rückenlehne des zweiten Fahrzeugsitzes in Sitzstellung nicht senkrecht ist (d.h. die Rückenlehne also schräg steht), kann die senkrechte Stellung auch während oder zeitlich nach der vorgenannten Schwenkbewegung des Sitzflächenelementes eingestellt werden. Unter einer Schwenkbewegung des Sitzflächenelementes "nach hinten" wird im Kontext dieser Erfindung verstanden, dass das Sitzflächenelement von einer ersten in Bezug auf die Aufstandsfläche näherungsweise horizontalen Stellung, in der das Sitzflächenelement in einer ersten (beispielsweise zur Längsachse des Fahrzeugs parallelen) Richtung orientiert ist, mittels der vorgenannten Schwenkbewegung in eine zweite ebenfalls näherungsweise horizontale Stellung überführt wird, in der das Sitzflächenelement entgegengesetzt zu dieser ersten Richtung orientiert ist. Das Sitzflächenelement des zweiten Fahrzeugsitzes zeigt somit beispielsweise in Sitzstellung in Fahrtrichtung des Fahrzeugs (d.h. ist "nach vorn" orientiert) und zeigt in Liegestellung entgegengesetzt zur Fahrtrichtung (d.h. ist "nach hinten" orientiert). Die Schwenkbewegung des Sitzflächenelementes erfolgt im Freiraum zwischen der

Aufstandfläche des Sitzsystems auf dem Fahrzeugboden und der zur Aufstandfläche orientierten Unterseite des Sitzflächenelementes. In Liegestellung ist die Sitzoberfläche des Sitzflächenelementes des zweiten Fahrzeugsitzes nach unten, d.h. in Richtung auf die Aufstandsfläche orientiert, während die auf der zur Sitzoberfläche entgegengesetzten Seite des Sitzflächenelementes angeordnete Unterseite nach oben orientiert ist. Der erste Fahrgastsitz des Sitzsystems ist hingegen in an sich bekannter Weise durch vollständiges Umlegen der Rückenlehne von der Sitzstellung in die Liegestellung überführbar. Die Rückenlehne und das Sitzflächenelement des ersten Fahrgastsitzes sind gemäß der für einen menschlichen Körper korrekten ergonomischen Maße realisierbar und ermöglichen ein ermüdungsfreies Lagern von Kopf und Rumpf des menschlichen Körpers in liegender Körperhaltung. Hierzu ergänzend bildet das Sitzeflächenelement des zweiten Fahrzeugsitzes die für das Hochlagern und Ablegen der Beine erforderliche Ergänzung des ersten Fahrzeugsitzes aus. Beim Wechseln zwischen Sitz- und Liegestellung des Sitzsystems ist kein Verschieben von Fahrzeugsitzen (z.B. in einer zur FahrzeugLängsachse parallelen Richtung, um Abstände zwischen den Fahrzeugsitzen desselben oder benachbarter Sitzsysteme zu verändern) erforderlich; somit besteht auch kein Bedarf an diesbezüglichen Führungsschienen.

Auf diese Weise ist ein Sitzsystem realisiert, bei der die beiden wesentlichen Komponenten des zweiten Fahrzeugsitzes, nämlich dessen Rückenlehne und dessen Sitzflächenelement, bei in Liegestellung positioniertem zweiten Fahrzeugsitz zur Verbesserung des Fahrgast-Komforts beitragen, indem das Sitzflächenelement eine Ablagefläche für die Beine eines auf dem ersten Fahrzeugsitz in Liegestellung ruhenden ersten Fahrgastes ausbildet, welche die durch den ersten Fahrgastsitz in Liegestellung ausgebildete Liegefläche ergänzt, und die Rückenlehne einen das Sitzsystem in einer parallel zur Fahrzeuglängsachse orientierten Raumrichtung optisch begrenzenden Raumteiler ausbildet, und zugleich bei in Sitzstellung positioniertem zweiten Fahrzeugsitz einen vollwertig für einen weiteren zweiten Fahrgast nutzbaren Sitzplatz ausbildet. Auf diese Weise ermöglicht das erfindungsgemäße Sitzsystem mittels einer einfach und schnell durchzuführenden Schwenkbewegung eine zügige Veränderung der Sitzlandschaft des Fahrzeuges von einer ersten Nacht-Stellung mit komfortablen, vollständig horizontal ausrichtbaren Liegeflächen, die mittels Raumteiler gegeneinander optisch abgetrennt sind, zu einer zweiten Tages-Stellung mit vollwertigen Sitzplätzen, deren Sitzteiler eine Verdopplung der Fahrgast-Kapazität im Tagesreiseverkehr gegenüber der Fahrgast-Kapazität im Nachtreiseverkehr ermöglicht.

Ein weiterer Vorteil besteht darin, dass das erfindungsgemäße Sitzsystem eine verbesserte Ausnutzung des innerhalb des Fahrzeugs für den Fahrgast-Transport zur Verfügung stehenden Raumes auch in der Nacht-Stellung bzw. in der Liegestellung ermöglicht, da der in der Sitzstellung des zweiten Fahrzeugsitzes durch dessen Sitzflächenelement beanspruchte Einbauraum durch dessen Überführung in die Liegestellung vollständig freigegeben und für die horizontale Liegestellung der Rückenlehne des ersten Fahrzeugsitzes eines benachbarten weiteren Sitzsystems zur Verfügung steht. So kann ein Kippen der Rückenlehne des ersten Fahrzeugsitzes eines benachbarten weiteren Sitzsystems in Liegestellung bis zum Erreichen einer vollständig horizontalen Stellung realisiert werden, ohne dass es hierbei zu einer Kollision mit dem Sitzflächenelement des zweiten Fahrzeugsitzes des ersten Sitzsystems kommt. Auf diese Weise wird mittels des erfindungsgemäßen Sitzsystems nicht nur eine optimale Raumausnutzung im Tagesreiseverkehr mit in Sitzposition gestellten Fahrzeugsitzen sondern auch eine optimale Raumausnutzung im Nachtreiseverkehr mit in Liegeposition gestellten Fahrzeugsitzen erreicht. Die Erfindung ermöglicht es, im selben Fahrzeug eine Reihenbestuhlung mit unterschiedlichen Sitzteilern für Tages- und Nachtverkehre zu realisieren, ohne dass hierbei Sitzabstände verändert oder einzelne Sitze wechselweise aus- bzw. eingebaut werden müssen. Der Umbau zwischen Tages- und Nachtstellung ist somit ohne Werkzeuge und insbesondere ohne Werkstattaufenthalt des betroffenen Fahrzeugs möglich.

Dabei ist in bevorzugter Weise vorgesehen, dass die zur Horizontalachse entfernt angeordnete Vorderkante des Sitzflächenelements des zweiten Fahrzeugsitzes in Liegestellung an einer in Richtung auf den zweiten Fahrzeugsitz zeigenden Vorderkante des Sitzflächenelements des ersten Fahrzeugsitzes anliegt. Hierdurch kann nicht nur die Raumausnutzung maximiert werden, sondern insbesondere auch dem Fahrgast-Komfort abträgliche Lücken in der durch das Sitzsystem in Liegeposition ausgebildeten horizontalen Liegefläche vermieden werden.

Die Erfindung sieht ferner vor, dass die Rückenlehne des zweiten Fahrzeugsitzes um die Horizontalachse drehgelenkig gegenüber der Bodenhalterung des Fahrzeugsitzes gelagert und um diese unabhängig von der Stellung der Sitzelementes verstellbar ist. Es handelt sich hierbei um dieselbe Horizontalachse, um die auch das Sitzflächenelement des zweiten Fahrzeugsitzes drehbar gelagert ist. Dies ermöglicht eine platzsparende Konstruktion des Fahrzeugsitzes und kann gemäß einer ersten Ausführungsvariante mittels einer Hohlwelle realisiert sein.

Eine hierzu alternative Ausführungsvariante sieht vor, dass erster und zweiter Fahrgastsitz Stellmotoren zur Verstellung der Rückenlehnen und Sitzflächenelemente zwischen Sitzstellung und Liegestellungen aufweisen. Dabei können sowohl Rückenlehne als auch das Sitzflächenelement über Getriebemotoren verstellbar siein, welche mit jeweils einem auf der Horizontalachse aufgeschrumpften Zahnrad bzw. Ritzel in Eingriff stehen.

Gemäß einer besonders bevorzugten Ausführungsform der Erfindungsidee ist die zur Sitzoberfläche entgegengesetzte Unterseite des Sitzflächenelementes des zweiten Fahrzeugsitzes mit einer abriebfesten und glatten Oberfläche versehen. Dies erleichtert die Reinigung, da diese Unterseite des Sitzflächenelementes in Liegestellung zur Ablage bzw. Stützung der Füße eines Benutzers des Sitzsystems vorgesehen ist und dieser hierfür seine Schuhe nicht ablegen muss.

Das erfinderische Grundkonzept wird wirkungsvoll dadurch unterstützt, dass die Bodenhalterung als monolithischer Säulenkörper ausgeführt ist und die Horizontalachse als freitragender Kragträger einseitig an der Bodenhalterung angebaut ist. Auf diese Weise wird die Aufstellfläche bzw. der Bodenbereich unterhalb des Fahrzeugsitzes von Einbauten freigehalten. Dies erhöht nicht nur den Sitzkomfort für Reisende, sondern vereinfacht auch die Verstellbarkeit des Sitzflächenelementes, welches zwischen der horizontalen Sitzstellung und der ersten bzw. zweiten Ruheposition frei unter der Horizontalachse verschwenkbar ist. In besonders bevorzugter Weise ist der Bereich, an dem die Horizontalachse an die Bodenhalterung angebaut ist, höhenverstellbar in Bezug auf die Aufstandsfläche des Fahrzeugsitzes in einem Fahrzeug.

Die Erfindung bezieht sich ferner auf ein Fahrzeug mit einem zur Personenbeförderung eingerichteten Innenraum mit mindestens einem gemäß der vorgenannten technischen Merkmale ausgeführten Sitzsystem. Erfindungsgemäße Fahrzeuge können mit wenig Aufwand zwischen verschiedenen Sitzteilern für Tages- und Nachtverkehre umgebaut werden, ohne dass hierbei Sitzabstände verändert oder einzelne Sitze wechselweise aus- bzw. eingebaut werden müssen. Der Umbau zwischen Tages- und Nachtstellung ist insbesondere ohne Werkzeuge und ohne Werkstattaufenthalt des betroffenen Fahrzeugs möglich.

Hierbei ist vorgesehen, dass der Abstand zweier benachbarter Sitzsysteme in der zur Längsachse des Fahrzeugs parallelen Richtung der Längserstreckung der Rückenlehne des jeweils ersten Fahrzeugsitzes entspricht. Dies ermöglicht eine bestmögliche Raumausnutzung im Rahmen der im Tagesreiseverkehr und im Nachreiseverkehr zur Verfügung stehenden, voneinander divergierenden Sitzteiler bzw. Sitzabstände.

Weiters sieht die Erfindung vor, dass das Fahrzeug eine Steuervorrichtung zur zeitgleichen Verstellung einer Mehrzahl von Sitzsystemen zwischen Sitz- und Liegestellung aufweist.

Die vorliegende Erfindung wird nachfolgend anhand eines Ausführungsbeispiels und dazugehöriger Zeichnungen näher erläutert. Es zeigen
Figur 1: einzelner Fahrzeugsitz des Sitzsystems in Sitzstellung
Figur 2: Innenraum eines Fahrzeugs mit Reihenbestuhlung, gebildet aus Fahrzeugsitzen in Sitzstellung
Figur 3: Innenraum eines Fahrzeugs mit Reihenbestuhlung, gebildet aus Fahrzeugsitzen in Zwischenstellung zwischen Sitzposition und Liegestellung
Figur 4: Innenraum eines Fahrzeugs mit Reihenbestuhlung, gebildet aus Fahrzeugsitzen in Liegestellung

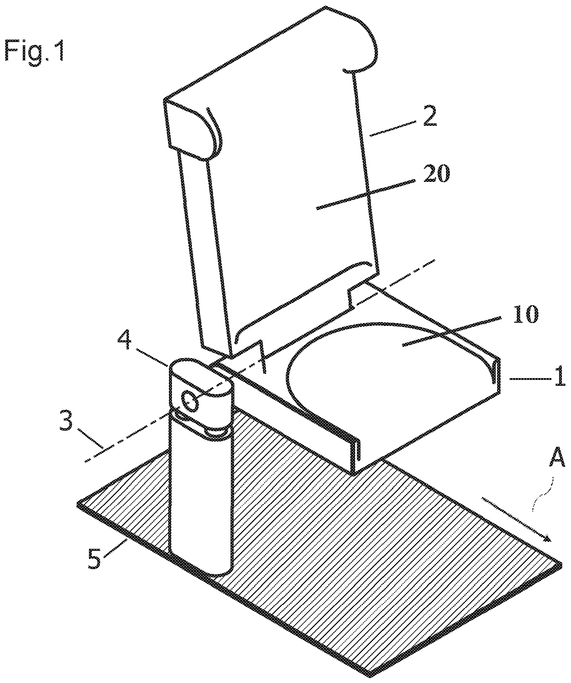

Der erfindungsgemäße Fahrzeugsitz umfasst ein Sitzflächenelement (1), welches auf seiner in Sitzposition nach oben zeigenden (bzw. von der Aufstandsfläche (5) des Sitzes auf dem Fahrzeugboden abgewandten) Oberseite eine Sitzschale und / oder eine Polsterung als Sitzfläche für einen Fahrgast aufweist, und eine Rückenlehne (2). Die Rückenlehne (2) und das Sitzflächenelement (1) sind mittels einer Horizontalachse (3) drehgelenkig miteinander verbunden, wobei die Horizontalachse (3) wiederum als einseitiger Kragträger an einer säulenartigen Bodenhalterung (4) angebaut ist. Der Bereich, in dem die Horizontalachse (3) in der Bodenhalterung gelagert ist, ist höhenverstellbar in Bezug auf die Aufstandsfläche (5) ausgeführt (in Figur 1 ist dies durch die beiden teleskopartigen vertikalen Stangen zwischen dem oberen Bereich der Bodenhalterung (4) mit dem Lager der Horizontalachse (3) und dem unteren Bereich der Bodenhalterung (4), die auf der Aufstandsfläche (4) steht, angedeutet). Jedes Sitzflächenelement weist neben der vorgenannten Oberseite, welche in Sitzposition des Fahrzeugsitzes die Sitzfläche für den Fahrgast ausbildet, an seiner hierzu entgegengesetzt orientierten Unterseite eine als Liegefläche für den Fahrgast ausgebildete Liegeseite auf.

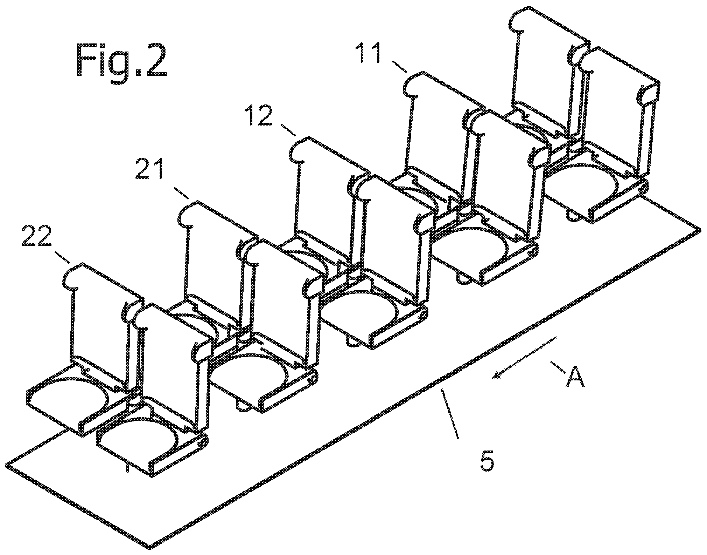

In den Figuren 2 bis 4 ist der Innenraum eines Fahrzeugs dargestellt, welcher eine Reihenbestuhlung mit jeweils paarweise angeordneten Fahrzeugsitzen aufweist, wobei entlang der Fahrzeuglängsachse eine Abfolge von jeweils einem Paar erfindungsgemäßer Fahrzeugsitze (21, 22, 23) und einem Paar herkömmlicher Fahrzeugsitze (11, 12) angeordnet ist. Erfindungsgemäße und herkömmliche Fahrzeugsitze wechseln einander somit entlang der Fahrzeuglängsrichtung ab.

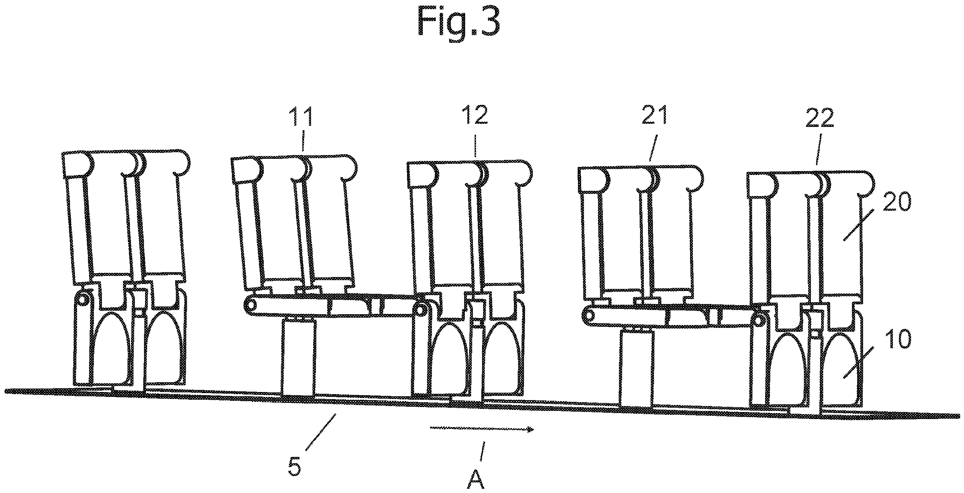

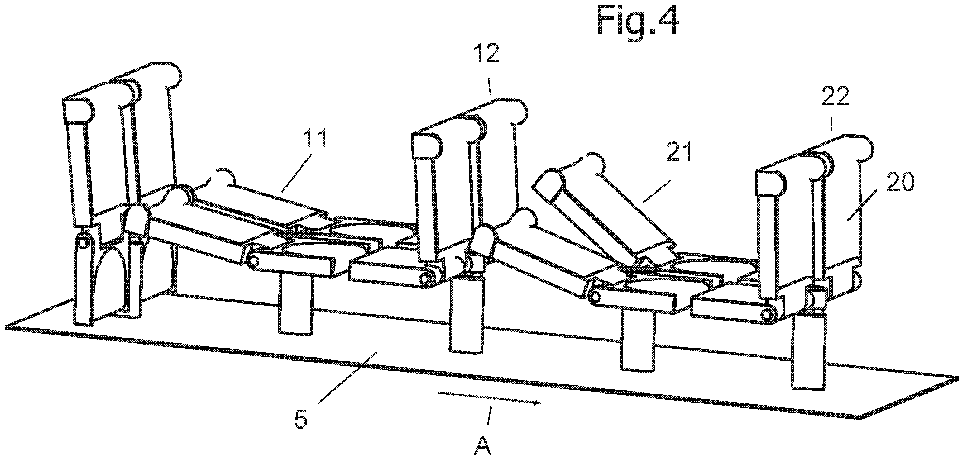

Figur 2 zeigt sämtliche Fahrzeugsitze des Fahrzeug-Innenraums in Sitzposition. Figur 3 zeigt eine Anordnung, bei der die Sitzflächenelemente der erfindungsgemäßen Fahrzeugsitze (21, 22, 23) jeweils in die erste Ruheposition verschwenkt sind. Hierbei sind die Sitzflächenelemente in etwa vertikal nach unten in Richtung auf die Aufstandsfläche (5) der Fahrzeugsitze auf dem Fahrzeugboden orientiert. Figur 4 zeigt eine Anordnung, bei der die Sitzflächenelemente der erfindungsgemäßen Fahrzeugsitze (21, 22, 23) über die erste Ruheposition hinaus in ihre jeweils zweite Ruheposition verschwenkt sind. Hierbei sind die Sitzflächenelemente um circa 180° unter den jeweiligen Rückenlehnen der Sitze hindurch nach hinten verschwenkt und in etwa horizontal ausgerichtet. Die ursprüngliche Unterseite der Sitzflächenelemente bildet die nun nach oben orientierte Liegeseite. Die Liegeseite eines erfindungsgemäßen Fahrzeugsitzes ist hierbei in etwa derselben Höhenlage wie das Sitzflächenelement des jeweils dahinter angeordneten Fahrzeugsitzes, so dass beide eine in etwa durchgehende Liegefläche ausbilden. Idealerweise ist der Sitzteiler zwischen beiden Fahrzeugsitzen derart gewählt, dass der horizontale Abstand zwischen deren beider Sitzflächenelemente in dieser Positionierung sehr klein ist bzw. nahezu verschwindet (in Figur 4 ist dieser Abstand aus Gründen der Übersichtlichkeit der Darstellung übertrieben groß dargestellt). Zusätzlich kann die Rückenlehne jedes herkömmlichen Fahrzeugsitzes (11, 12) nach hinten in eine nahezu horizontale Stellung geklappt werden. Dies wird dadurch ermöglicht, dass das Sitzflächenelement des wiederum dahinter angeordneten erfindungsgemäßen Fahrzeugsitzes seinerseits ebenfalls in die erste Ruheposition (Fahrzeugsitz 21) oder zweite Ruheposition (Fahrzeugsitz 22) abgeklappt ist und diese Horizontalstellung der Rückenlehnen nicht behindert. Somit wird im Ergebnis aus der Rücklehnen und der Sitzfläche eines herkömmlichen Fahrzeugsitzes sowie aus der Liegeseite des Sitzflächenelementes eines erfindungsgemäßen Fahrzeugsitzes eine durchgehende Liegefläche für einen Fahrgast ausgebildet. Ein weiterer Vorteil der Erfindung besteht darin, dass die erfindungsgemäße bauliche Trennung zwischen einer oberen Sitzfläche und einer unteren Liegeseite beim Sitzflächenelement verhindert, dass die Sitzfläche durch unsachgemäße Benutzung im Nachtbetrieb (Benutzung durch Fahrgast mit Schuhen) verschmutzt wird.

Nachfolgend wird ein mögliches Szenario beim Umbau eines mit erfindungsgemäßen Sitzsystemen ausgestatteten Fahrzeug zwischen Tagesbetrieb (mit Sitzsystemen in Sitzstellung) und Nachtbetrieb (mit Sitzsystemen in Liegestellung) beschrieben. Hierzu können die Fahrzeugsitze jedes Sitzsystems sowohl mit durch den Fahrgast individuell bedienbaren Betätigungseinrichtungen (Drucktaster etc.) zur separaten Ansteuerung von Sitzflächenelement und Rückenlehne jedes Fahrzeugsitzes als auch mit durch Betriebspersonal des Fahrzeugbetreibers (Servicepersonal, Busfahrer etc....) zentralen bedienbaren Betätigungseinrichtungen zur gesamthaften Ansteuerung der Sitzflächenelement und Rückenlehnen aller im Fahrzeug-Innenraum eingebauter Fahrzeugsitze zwischen Sitz- und Liegestellung verändert werden. Im Tagesbetrieb befinden sich die zweiten Fahrzeugsitze jedes Sitzsystems in Sitzstellung und sind für Fahrgäste in sitzender Körperhaltung nutzbar. Ein übermäßiges Umlegen der Rückenlehnen eines jeden ersten Fahrzeugsitzes "nach hinten" ist deshalb durch einen Grenzwertgeber bzw. Anschlag verhindert. Ebenso ist die Verschwenkbarkeit des Sitzflächenelementes jedes zweiten Fahrzeugsitzes im Betriebsmodus für den Tagesverkehr deaktiviert. Der Wechsel von Tages- zum Nachtbetrieb des Fahrzeuges erfolgt zu einem Zeitpunkt, in dem sich keine Fahrgäste im Fahrzeug befinden (z.B. während einer betrieblichen Pause des Fahrzeugs). Hierzu aktiviert das Betriebspersonal die zentral bedienbare Betätigungseinrichtungen bzw. deaktiviert die individuell bedienbaren Betätigungseinrichtungen der Fahrgäste. Hierbei werden in einem ersten Teilschritt alle Fahrzeugsitze in eine Grundstellung mit steil (bzw. senkrecht) gestellter Rückenlehne überführt und in einem zweiten Teilschritt die Sitzflächenelemente der jeweils zweite Fahrzeugsitze in eine vertikal nach unten in Richtung auf die Aufstandsfläche bzw. den Fahrzeugbode orientierte Zwischenstellung überführt. Diese Zwischenstellung stellt den Ausgangszustand für den Nachtbetrieb des Fahrzeugs dar; der Zugang der Fahrgäste in das für den Nachtbetrieb vorbereitete Fahrzeug kann zugelassen werden und die individuelle Betätigung der Fahrgäste in einem Betriebsmodus für den Nachtverkehr wieder freigegeben werden. In dieser Stellung kann ein Sitzsystem durch einen Fahrgast betreten und in Gebrauch genommen werden. Die Begrenzung der vollständigen Verschwenkbarkeit der Rückenlehne jedes ersten Fahrzeugsitzes bis zur horizontalen Stellung ist deaktiviert und kann durch den Fahrgast genutzt werden. Ebenso ist das Sitzflächenelement jedes zweiten Fahrzeugsitzes in Richtung zum ersten Fahrzeugsitz zur Herstellung einer Fußauflage möglich. Die Verschwenkbarkeit der Rückenlehne jedes zweiten Fahrzeugsitzes ist in diesem Betriebsmodus jedoch gesperrt. Das Sitzsystem ermöglicht eine individuelle Einstellung der Fahrzeugsitze in Sitz- oder Liegestellungen mit unterschiedlichsten Neigungen (d.h. zwischen vollständig aufrechter Sitzstellung und vollständig horizontaler Liegestellung). Der Wechsel von Nacht- zu Tagesbetrieb erfolgt in hierzu inverser Abfolge; ebenfalls mittels zentraler Ansteuerung der Fahrzeugsitze durch das Betriebspersonal während einer Betriebspause des Fahrzeugs ohne Anwesenheit von Fahrgästen.

### Bezugszeichenliste:

- 1: Sitzflächenelement
- 10: Sitzoberfläche des Sitzflächenelements (1)
- 2: Rückenlehne
- 20: Sitzoberfläche der Rückenlehne (2)
- 3: Horizontalachse
- 4: Bodenhalterung
- 5: Aufstandsfläche
- 11: erster Fahrzeugsitz eines ersten Sitzsystems
- 12: zweiter Fahrzeugsitz eines ersten Sitzsystems
- 21: erster Fahrzeugsitz eines zweiten Sitzsystems
- 22: zweiter Fahrzeugsitz eines zweiten Sitzsystems
- A: zur Längsaches des Fahrzeugs parallele Richtung

## Patentansprüche

1. Sitzsystem für ein Fahrzeug, umfassend einen ersten (11, 21) und einen zweiten (12, 22) Fahrzeugsitz,
▪ wobei erster (11, 21) und zweiter (12, 22) Fahrzeugsitz längs einer zur Längsachse des Fahrzeugs parallelen Richtung (A) linear zueinander angeordnet sind,
▪ und wobei jeder Fahrzeugsitz (11, 12, 21, 22) umfasst ein Sitzflächenelement (1), eine Rückenlehne (2) sowie eine Bodenhalterung (4) zur Befestigung des Fahrzeugsitzes (11, 12, 21, 22) auf einer Aufstandsfläche (5) des Fahrzeugs,
▪ wobei jeder Fahrgastsitz zwischen einer Sitzstellung und einer Liegestellung verstellbar ist und wobei die Neigung der Rückenlehne (2) in Bezug auf das Sitzflächenelement (1) verstellbar ist,
▪ wobei das Sitzflächenelement (1) und die Rückenlehne (2) jedes Fahrzeugsitzes jeweils eine in Sitzstellung zur Aufnahme eines Fahrgastes in sitzender Körperhaltung eingerichtete Sitzoberfläche (10, 20) aufweisen,
▪ wobei das Sitzflächenelement (1) des zweiten Fahrzeugsitzes (12, 22) mittels einer um eine Horizontalachse (3) gegenüber der Bodenhalterung (4) drehgelenkigen Lagerung in eine Liegestellung verschwenkbar ist, bei der das Sitzflächenelement (1) des zweiten Fahrzeugsitzes (12, 22) eine zur Aufstandsfläche (5) des Fahrzeugs parallele Ausrichtung mit zur Aufstandsfläche (5) hin orientierter Sitzoberfläche (10) und die Rückenlehne (2) des zweiten Fahrzeugsitzes (12, 22) eine zur Aufstandsfläche (5) des Fahrzeugs senkrechte Ausrichtung aufweisen,
**dadurch gekennzeichnet, dass**
in dieser Liegestellung des zweiten Fahrzeugsitzes (12, 22) die Sitzoberfläche (10) von dessen Sitzflächenelement (1) und die Sitzoberfläche (20) von dessen Rückenlehne (2) einen Zwischenwinkel von 270° zueinander ausbilden, wobei die Rückenlehne (2) in unveränderter Ausgangsposition der Sitzstellung verbleibt.

2. Sitzsystem für ein Fahrzeug nach Patentanspruch 1, **dadurch gekennzeichnet, dass** die zur Horizontalachse (3) entfernt angeordnete Vorderkante des Sitzflächenelements (1) des zweiten Fahrzeugsitzes (12, 22) in Liegestellung an einer in Richtung auf den zweiten Fahrzeugsitz (12, 22) zeigenden Vorderkante des Sitzflächenelements des ersten Fahrzeugsitzes (11, 21) anliegt.

3. Sitzsystem für ein Fahrzeug nach einem der Patentansprüche 1 oder 2, **dadurch gekennzeichnet, dass** die Rückenlehne (2) des zweiten Fahrzeugsitzes (12, 22) um die Horizontalachse (3) drehgelenkig gegenüber der Bodenhalterung (4) des Fahrzeugsitzes gelagert und um diese unabhängig von der Stellung der Sitzelementes (1) verstellbar ist.

4. Sitzsystem für ein Fahrzeug nach einem der Patentansprüche 1 bis 3, **dadurch gekennzeichnet, dass** erster (11, 21) und zweiter (12, 22) Fahrgastsitz Stellmotoren zur Verstellung der Rückenlehnen und Sitzflächenelemente zwischen Sitzstellung und Liegestellungen aufweisen.

5. Sitzsystem für ein Fahrzeug nach einem der Patentansprüche 1 bis 4, **dadurch gekennzeichnet, dass** die zur Sitzoberfläche (10) entgegengesetzte Unterseite des Sitzflächenelementes (1) des zweiten Fahrzeugsitzes (12, 22) mit einer abriebfesten und glatten Oberfläche versehen ist.

6. Sitzsystem für ein Fahrzeug nach einem der Patentansprüche 1 bis 5, **dadurch gekennzeichnet, dass** die Bodenhalterung (4) als monolithischer Säulenkörper ausgeführt ist und die Horizontalachse (3) als freitragender Kragträger einseitig an der Bodenhalterung (4) angebaut ist.

7. Fahrzeug mit einem zur Personenbeförderung eingerichteten Innenraum mit mindestens einem gemäß einem der Patentansprüche 1 bis 6 ausgeführten Sitzsystem.

8. Fahrzeug mit einem zur Personenbeförderung eingerichteten Innenraum nach Patentanspruch 7, **dadurch gekennzeichnet, dass** der Abstand zweier benachbarter Sitzsysteme in der zur Längsachse des Fahrzeugs parallelen Richtung (A) der Längserstreckung der Rückenlehne des jeweils ersten Fahrzeugsitzes (11, 21) entspricht.

9. Fahrzeug mit einem zur Personenbeförderung eingerichteten Innenraum nach Patentanspruch 7 oder 8, **dadurch gekennzeichnet, dass** das Fahrzeug eine Steuervorrichtung zur zeitgleichen Verstellung einer Mehrzahl von Sitzsystemen zwischen Sitz- und Liegestellung aufweist.

## Claims

1. Seating system for a vehicle, comprising a first (11, 21) and a second (12, 22) vehicle seat,
- wherein the first (11, 21) and second (12, 22) vehicle seats are arranged linearly with respect to one another along a direction (A) parallel to the longitudinal axis of the vehicle,
- and wherein each vehicle seat (11, 12, 21, 22) comprises a seat base element (1), a backrest (2) and a floor mounting (4) for securing the vehicle seat (11, 12, 21, 22) on a support surface (5) of the vehicle,
- wherein each passenger seat is adjustable between a sitting position and a reclining position and wherein the inclination of the backrest (2) is adjustable with respect to the seat base element (1),
- wherein the seat base element (1) and the backrest (2) of each vehicle seat each have a seat surface (10, 20) set up in the sitting position to receive a passenger in a sitting posture,
- wherein the seat base element (1) of the second vehicle seat (12, 22) is pivotable into a reclining position by means of a pivoting mounting about a horizontal axis (3) relative to the floor mounting (4), in which the seat base element (1) of the second vehicle seat (12, 22) has an orientation parallel to the support surface (5) of the vehicle with the seat surface (10) orientated towards the support surface (5) and the backrest (2) of the second vehicle seat (12, 22) has an orientation perpendicular to the support surface (5) of the vehicle,
**characterized in that**
in this reclining position of the second vehicle seat (12, 22), the seat surface (10) of its seat base element (1) and the seat surface (20) of its backrest (2) form an intermediate angle of 270° to one another, the backrest (2) remaining in the unchanged starting position of the sitting position.

2. Seating system for a vehicle according to claim 1, **characterized in that** the front edge of the seat base element (1) of the second vehicle seat (12, 22), which is arranged away from the horizontal axis (3), abuts in the reclining position against a front edge of the seat base element of the first vehicle seat (11, 21), which front edge points in the direction of the second vehicle seat (12, 22).

3. Seating system for a vehicle according to claim 1 or 2, **characterized in that** the backrest (2) of the second vehicle seat (12, 22) is pivotably mounted about the horizontal axis (3) relative to the floor mounting (4) of the vehicle seat and is adjustable about the latter independently of the position of the seat element (1).

4. Seating system for a vehicle according to one of claims 1 to 3, **characterized in that** the first (11, 21) and second (12, 22) passenger seats comprise servomotors for adjusting the backrests and seat base elements between the sitting position and the reclining position.

5. Seating system for a vehicle according to one of claims 1 to 4, **characterized in that** the lower side of the seat base element (1) of the second vehicle seat (12, 22), which is opposite the seat surface (10), is provided with an abrasion-resistant and smooth surface.

6. Seating system for a vehicle according to one of claims 1 to 5, **characterized in that** the floor mounting (4) is designed as a monolithic column body and the horizontal axis (3) is mounted on one side of the floor mounting (4) as a self-supporting cantilever.

7. Vehicle with an interior space equipped for passenger transport with at least one seating system according to one of claims 1 to 6.

8. Vehicle with an interior space equipped for passenger transport according to claim 7, **characterized in that** the distance between two adjacent seating systems in the direction (A) parallel to the longitudinal axis of the vehicle corresponds to the longitudinal dimension of the backrest of the respective first vehicle seat (11, 21).

9. Vehicle with an interior space equipped for passenger transport according to patent claim 7 or 8, **characterized in that** the vehicle has a control device for simultaneous adjustment of a plurality of seating systems between the sitting and reclining positions.

## Revendications

1. Système de sièges pour un véhicule, comprenant un premier (11, 21) et un deuxième (12, 22) siège de véhicule,
- dans lequel le premier (11, 21) et le deuxième (12, 22) sièges de véhicule sont disposés linéairement l'un par rapport à l'autre le long d'une direction (A) parallèle à l'axe longitudinal du véhicule,
- et dans lequel chaque siège de véhicule (11, 12, 21, 22) comprend un élément de base du siège (1), un dossier (2) ainsi qu'un support de sol (4) pour la fixation du siège de véhicule (11, 12, 21, 22) sur une surface d'appui (5) du véhicule,
- dans lequel chaque siège de passager est réglable entre une position assise et une position couchée et dans lequel l'inclinaison du dossier (2) est réglable par rapport à l'élément de base du siège (1),
- dans lequel l'élément de base du siège (1) et le dossier (2) de chaque siège de véhicule comprend chacun une surface d'assise (10, 20) aménagée en position assise pour recevoir un passager en position assise,
- l'élément de base du siège (1) du deuxième siège de véhicule (12, 22), pouvant être pivoté dans une position couchée au moyen d'un logement articulé en rotation autour d'un axe horizontal (3) par rapport au support de sol (4), dans laquelle l'élément de base du siège (1) du deuxième siège de véhicule (12, 22) présente une orientation parallèle à la surface d'appui (5) du véhicule avec une surface d'assise (10) orientée vers la surface d'appui (5) et le dossier (2) du deuxième siège de véhicule (12, 22) présente une orientation perpendiculaire à la surface d'appui (5) du véhicule,
**caractérisé en ce que**
dans cette position couchée du deuxième siège de véhicule (12, 22), la surface d'assise (10) de son élément de base du siège (1) et la surface d'assise (20) de son dossier (2) forment entre elles un angle intermédiaire de 270°, le dossier (2) restant dans la position initiale inchangée de la position assise.

2. Système de sièges pour un véhicule selon la revendication 1, **caractérisé en ce que** le bord avant de l'élément de base du siège (1) du deuxième siège de véhicule (12, 22), qui est éloigné de l'axe horizontal (3), s'applique, en position couchée, contre un bord avant de l'élément de base du siège du premier siège de véhicule (11, 21), qui est orienté vers le deuxième siège de véhicule (12, 22).

3. Système de sièges pour un véhicule selon la revendication 1 ou 2, **caractérisé en ce que** le dossier (2) du deuxième siège de véhicule (12, 22) est disposé de manière articulée en rotation autour de l'axe horizontal (3) par rapport au support de sol (4) du siège de véhicule et est réglable autour de celui-ci indépendamment de la position de l'élément de base du siège (1).

4. Système de sièges pour un véhicule selon l'une des revendications 1 à 3, **caractérisé en ce que** le premier (11, 21) et le deuxième (12, 22) siège de passager comprennent des servomoteurs pour le réglage des dossiers et des éléments de base du siège entre la position assise et la position couchée.

5. Système de sièges pour un véhicule selon l'une des revendications 1 à 4, **caractérisé en ce que** la face arrière de l'élément de base du siège (1) du deuxième siège de véhicule (12, 22), qui est opposée à la surface d'assise (10), est pourvue d'une surface lisse et résistante à l'usure.

6. Système de sièges pour un véhicule selon l'une des revendications 1 à 5, **caractérisé en ce que** le support de sol (4) est réalisé sous la forme d'un corps de colonne monolithique, et l'axe horizontal (3) est monté d'un côté sur le support de sol (4) sous la forme d'une poutre en porte-à-faux.

7. Véhicule avec un espace intérieur aménagé pour le transport de personnes avec au moins un système de sièges réalisé selon l'une des revendications 1 à 6.

8. Véhicule avec un espace intérieur aménagé pour le transport de personnes selon la revendication 7, **caractérisé en ce que** la distance entre deux systèmes de siège voisins dans la direction (A) parallèle à l'axe longitudinal du véhicule correspond à la dimension longitudinale du dossier du premier siège respectif (11, 21) du véhicule.

9. Véhicule avec un espace intérieur aménagé pour le transport de personnes selon la revendication 7 ou 8, **caractérisé en ce que** le véhicule présente un dispositif de commande pour le réglage simultané d'une pluralité de systèmes de sièges entre la position assise et la position couchée.
